# EUROPÄISCHE PATENTSCHRIFT

(11) **EP 4 147 841 B1**
(45) Veröffentlichungstag und Bekanntmachung des Hinweises auf die Patenterteilung: **27.08.2025**
(21) Anmeldenummer: 22194908.4
(22) Anmeldetag: 09.09.2022
(51) Int. Cl.: B29B 15/12, B29C 31/04, B29C 70/50, B29C 70/54, B05C 3/18, B05C 11/04, B05C 11/10

(54) **PRODUKTIONSVORRICHTUNG, INSBESONDERE SMC-PRODUKTIONSVORRICHTUNG, ZU EINER HERSTELLUNG VON DUROPLASTISCHEN HALBZEUGEN**
PRODUCTION DEVICE, IN PARTICULAR SMC PRODUCTION DEVICE, FOR PRODUCING THERMOSET SEMI-FINISHED PRODUCTS
DISPOSITIF DE PRODUCTION, EN PARTICULIER DISPOSITIF DE PRODUCTION SMC, POUR LA PRODUCTION DE DEMI-PRODUITS THERMODURCISSABLES

(30) Priorität: 10.09.2021 DE 102021123510
(43) Veröffentlichungstag der Anmeldung: 15.03.2023
(73) Patentinhaber: DIEFFENBACHER GMBH Maschinen- und Anlagenbau, 75031 Eppingen (DE)
(72) Erfinder: Bücheler, David, 76356 Weingarten (DE)
(74) Vertreter: LBP Lemcke, Brommer & Partner Patentanwälte mbB

(56) Entgegenhaltungen:
- WO-A1-2013/160290
- DE-A1- 102010 002 844
- DE-A1- 102010 045 888

## Beschreibung

### Stand der Technik

Die Erfindung betrifft eine Produktionsvorrichtung, insbesondere eine SMC-Produktionsvorrichtung, zu einer Herstellung von duroplastischen Halbzeugen nach dem Oberbegriff des Anspruchs 1. Ein Verfahren zur Herstellung von faserverstärkten Formteilen (SMC) im Direktverfahren ist aus der Druckschrift WO2013160290 A1 bekannt.

Es ist bereits eine Produktionsvorrichtung, insbesondere eine SMC-Produktionsvorrichtung, zu einer Herstellung von duroplastischen Halbzeugen, mit zumindest einer Materialauftrageinheit, insbesondere einer Rakeleinheit, zu einem Auftragen von einem Material, insbesondere einer Harzmatrix, auf ein Trägerelement, insbesondere eine Trägerfolie, vorgeschlagen worden.

Die Aufgabe der Erfindung besteht insbesondere darin, eine gattungsgemäße Produktionsvorrichtung mit einer hohen Fertigungsqualität bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Produktionsvorrichtung, insbesondere von einer SMC-Produktionsvorrichtung, zu einer Herstellung von duroplastischen Halbzeugen, wie beispielsweise Sheet Moulding Compounds (SMC), Prepregs o. dgl., mit zumindest einer Materialauftrageinheit, insbesondere einer Rakeleinheit, zu einem Auftragen von einem Material, insbesondere einer Harzmatrix, auf ein Trägerelement, insbesondere eine Trägerfolie.

Es wird vorgeschlagen, dass die Produktionsvorrichtung zumindest eine Erfassungseinheit umfasst, die zumindest ein, insbesondere optisches, Sensorelement zu einer Erfassung einer, insbesondere maximalen, Stärke des auf das Trägerelement aufgetragenen Materials aufweist. Die Erfassungseinheit ist vorzugsweise dazu vorgesehen, eine, insbesondere maximale, Stärke des auf das Trägerelement aufgetragenen Materials berührungslos zu erfassen. Bevorzugt ist die Erfassungseinheit dazu vorgesehen, eine, insbesondere maximale, Stärke des auf das Trägerelement aufgetragenen Materials optisch zu erfassen. Das Sensorelement ist vorzugsweise als optisches Sensorelement ausgebildet, wie beispielsweise als Lichtsensor, insbesondere Lasersensor oder konfokal-chromatischer Sensor o. dgl. Es ist jedoch auch denkbar, dass die Erfassungseinheit dazu vorgesehen ist, eine, insbesondere maximale, Stärke des auf das Trägerelement aufgetragenen Materials akustisch oder haptisch zu erfassen. Unter "vorgesehen" soll insbesondere speziell ausgelegt und/oder speziell ausgestattet verstanden werden. Darunter, dass ein Element und/oder eine Einheit zu einer bestimmten Funktion vorgesehen ist, soll insbesondere verstanden werden, dass das Element und/oder die Einheit diese bestimmte Funktion in zumindest einem Anwendungs- und/oder Betriebszustand erfüllen/erfüllt und/oder ausführen/ausführt.

Bevorzugt ist das Sensorelement in einem Nahbereich einer Auftragungsöffnung der Materialauftrageinheit angeordnet. Unter einem "Nahbereich der Auftragungsöffnung" soll ein Bereich um die Auftragungsöffnung verstanden werden, der einen maximalen Abstand zur Auftragungsöffnung aufweist, der insbesondere kleiner ist als 1 m, bevorzugt kleiner ist als 0,5 m und besonders bevorzugt kleiner ist als 0,25 m. Eine Größe, insbesondere eine Höhe, der Auftragungsöffnung ist bevorzugt mittels eines Verschluss- und/oder Abstreifelements, eines Rakelelements, der Materialauftrageinheit einstellbar, insbesondere infolge einer Bewegung des Verschluss- und/oder Abstreifelements relativ zu einem Materialaufnahmeelement, insbesondere einem Rakelkasten, der Materialauftrageinheit.

Erfindungsgemäß ist eine, insbesondere maximale, Stärke des auf das Trägerelement aufgetragenen Materials durch eine Größe, insbesondere eine Höhe, der Auftragungsöffnung vorgebbar. Mittels der Erfassungseinheit ist eine, insbesondere maximale, Stärke des auf das Trägerelement aufgetragenen Materials, das durch die Auftragungsöffnung auf das Trägerelement aufbringbar ist, überprüfbar. Bei einer Abweichung der gewünschten, insbesondere maximalen, Stärke des auf das Trägerelement aufgetragenen Materials kann vorteilhaft infolge einer Änderung einer Position des Verschluss- und/oder Abstreifelements, des Rakelelements, der Materialauftrageinheit relativ zum Materialaufnahmeelement, insbesondere dem Rakelkasten, eine, insbesondere automatische und/oder manuelle Nachjustierung der, insbesondere maximalen, Stärke des auf das Trägerelement aufgetragenen Materials erfolgen.

Unter einer "SMC-Produktionsvorrichtung" soll insbesondere eine Vorrichtung verstanden werden, die zumindest einen Teil einer Fertigungsanlage zur Produktion von faserverstärkten duroplastischen Werkstoffen, Sheet Moulding Compounds (SMC), bildet. Die Fertigungsanlage, insbesondere eine SMC-Fertigungsanlage, ist bevorzugt zu einer Produktion von mattenartigen Formmassen, insbesondere von Harzmatten, vorgesehen. Bevorzugt ist die Fertigungsanlage, insbesondere die SMC-Fertigungsanlage, durch Fördervorrichtungen, wie beispielsweise Förderbänder, Industrieroboter usw., mit einer weiterverarbeitenden Herstellungsvorrichtung, wie beispielsweise einer Presse usw., verbunden. Die Produktionsvorrichtung weist bevorzugt zu einem Transport des Trägerelements und/oder des aufgetragenen Materials eine Transporteinheit auf, die Teil einer Förder- und/oder Transporteinheit der Fertigungsanlage sein kann oder separat zu dieser ausgebildet sein kann. Unter einer "Transporteinheit" soll insbesondere eine Einheit zu einem Transport zumindest eines Produktionsguts, insbesondere des Materials, entlang einer vorgegebenen Produktionsrichtung verstanden werden. Vorzugsweise umfasst die Transporteinheit zumindest ein Förderband und/oder zumindest eine Förderwalze. Besonders bevorzugt umfasst die Transporteinheit zumindest ein Förderband und zumindest ein Wälzelement, auf dem das Förderband zumindest temporär aufliegt und/oder das von dem Förderband zumindest teilweise umschlungen ist. Es ist jedoch auch denkbar, dass die Transporteinheit alternativ oder zusätzlich andere, einem Fachmann als sinnvoll erscheinende Transportelemente aufweist, wie beispielsweise Luftkissenförderer o. dgl. Das Trägerelement kann als Trägerfolie ausgebildet sein, die mittels der Transporteinheit förderbar ist oder das Trägerelement kann als Teil der Transporteinheit, insbesondere als Förderband, ausgebildet sein. Bei einer Ausgestaltung des Trägerelements als Teil der Transporteinheit, insbesondere als Förderband, weist das Trägerelement vorzugsweise eine Beschichtung auf, die ein Ablösen des aufgetragenen Materials von dem Trägerelement ermöglicht. Die Beschichtung kann beispielsweise das als Förderband ausgebildete Trägerelement vor Verunreinigungen und/oder vor einem Ankleben des Materials schützen. Es ist jedoch auch denkbar, dass das Trägerelement als Trägerpulver ausgebildet ist, das auf ein Förderband der Transporteinheit aufgetragen werden kann, insbesondere um das Förderband vor Verunreinigungen und/oder vor einem Ankleben des Materials zu schützen. In einer bevorzugten Ausgestaltung ist das Trägerelement als Trägerfolie ausgebildet, auf die das Material, insbesondere die Harzmatrix, aufgetragen ist. Insbesondere ist die Trägerfolie zusammen mit dem darauf aufgetragenen Material mittels der Transporteinheit transportierbar, insbesondere zu weiteren Bearbeitungsstationen der Produktionsvorrichtung, wie beispielsweise zu einer Faserschneideinheit, mittels derer Fasern schneidbar sind, die dem auf der Trägerfolie aufgetragenen Material zuführbar sind, o. dgl.

Mittels der erfindungsgemäßen Ausgestaltung kann vorteilhaft eine hohe Prozessqualität erreicht werden. Es kann vorteilhaft mittels der Erfassungseinheit eine, insbesondere maximale, Stärke des auf das Trägerelement aufgetragenen Materials, das durch die Auftragungsöffnung auf das Trägerelement aufbringbar ist, überprüft werden. Es kann vorteilhaft eine konstruktiv einfache Ausgestaltung der Erfassungseinheit zu einer Überprüfung einer, insbesondere maximalen, Stärke des auf das Trägerelement aufgetragenen Materials erreicht werden.

Des Weiteren wird, insbesondere in einer bevorzugten Ausgestaltung der erfindungsgemäßen Produktionsvorrichtung, vorgeschlagen, dass das Sensorelement als konfokal-chromatischer Sensor ausgebildet ist. Vorzugsweise ist das Sensorelement derart ausgebildet, dass weißes Licht über Linsen des Sensorelements in verschiedene Spektren aufgespaltet und durch eine mehrlinsige Optik des Sensorelements auf ein Objekt, insbesondere das aufgetragene Material, fokussiert wird. Die Linsen sind so angeordnet, dass durch kontrollierte chromatische Abweichung das Licht in abstandsabhängige monochromatische Wellenlängen aufgeteilt wird. **In** einem Sensorcontroller des Sensorelements wird diejenige Wellenlänge zur Messung herangezogen, die sich exakt auf dem Objekt, insbesondere dem aufgetragenen Material, fokussiert. Dadurch kann vorteilhaft mittels des Sensorelements eine hohe Auflösung sowie ein kleiner Lichtpunkt erreicht werden. Vorzugsweise ist das Sensorelement dazu vorgesehen, Licht mit einer Wellenlänge von insbesondere weniger als 800 nm, bevorzugt weniger als 700 nm und ganz besonders bevorzugt mit einer Wellenlänge aus einem Wellenlängenbereich von 490 nm bis 650 nm auszustrahlen. Mittels der erfindungsgemäßen Ausgestaltung kann vorteilhaft eine präzise Erfassung der Stärke des aufgetragenen Materials erreicht werden - sowohl auf diffusen als auch auf spiegelnden Oberflächen. Es kann vorteilhaft eine hochauflösende Messung bis in den Nanometerbereich ermöglicht werden. Es kann vorteilhaft eine hohe Messgenauigkeit bei hohen Messraten, insbesondere auch bei wechselnden Oberflächenfarben oder bei einer transparenten Harzmatrix, ermöglicht werden. Es kann vorteilhaft eine hohe Prozessqualität erreicht werden.

Ferner wird vorgeschlagen, dass die Erfassungseinheit zumindest ein Niederhalteelement aufweist, das dazu vorgesehen ist, das Trägerelement zumindest abschnittsweise mit einer Kraft in Richtung einer Auflagefläche der Materialauftrageinheit, auf der das Trägerelement zumindest teilweise aufliegt, zu beaufschlagen. Vorzugsweise ist das Niederhalteelement zusätzlich zu einem Andruckelement, insbesondere einer Andruckrolle, der Materialauftrageinheit im Nahbereich der Auftragungsöffnung angeordnet. Das Niederhalteelement ist bevorzugt auf einer dem Sensorelement abgewandten Seite des Trägerelements an der Auflagefläche angeordnet. Bevorzugt ist das Trägerelement während eines Betriebs der Produktionsvorrichtung, insbesondere entlang einer zumindest im Wesentlichen parallel zur Auflagefläche verlaufenden Richtung, über das Niederhalteelement hinweg bewegbar, während das Niederhalteelement das Trägerelement mit einer Kraft in Richtung der Auflagefläche beaufschlagt. Unter "im Wesentlichen parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Vorzugsweise ist das Niederhalteelement dazu vorgesehen, das Trägerelement mit einer zumindest im Wesentlichen senkrecht zur Auflagefläche verlaufenden Kraft, insbesondere Zugkraft, zu beaufschlagen. Der Ausdruck "im Wesentlichen senkrecht" soll insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Das Niederhalteelement, insbesondere eine Niederhaltefläche des Niederhalteelements, weist vorzugsweise eine maximale Längserstreckung auf, die ein Vielfaches kleiner ist als eine maximale Längserstreckung der Auflagefläche. Die maximale Längserstreckung des Niederhalteelements, insbesondere die Niederhaltefläche des Niederhalteelements, kann identisch mit einer maximalen Quererstreckung des Niederhalteelements, insbesondere der Niederhaltefläche des Niederhalteelements, sein, insbesondere bei einer Ausgestaltung des Niederhalterelements mit einer quadratischen oder kreisrunden Niederhalterfläche, oder verschieden von der maximalen Quererstreckung des Niederhalteelements, insbesondere der Niederhaltefläche des Niederhalteelements, sein. Bevorzugt verläuft die maximale Längserstreckung des Niederhalteelements, insbesondere der Niederhaltefläche des Niederhalteelements, in einem an der Auflagefläche angeordneten Zustand des Niederhalteelements zumindest im Wesentlichen parallel zu einer Transportrichtung der Produktionsvorrichtung, insbesondere im Bereich der Materialauftrageinheit, entlang derer das Trägerelement während eines Betriebs der Produktionsvorrichtung bewegt wird. Bevorzugt verläuft die maximale Quererstreckung des Niederhalteelements, insbesondere die Niederhaltefläche des Niederhalteelements, zumindest im Wesentlichen senkrecht zur Transportrichtung und/oder zur maximalen Längserstreckung des Niederhalteelements, insbesondere der Niederhaltefläche des Niederhalteelements. Die Erfassungseinheit kann ein einzelnes Niederhalteelement oder eine Vielzahl an Niederhalteelementen aufweisen, das/die dazu vorgesehen ist/sind, das Trägerelement zumindest abschnittsweise mit einer Kraft in Richtung der Auflagefläche der Materialauftrageinheit, auf der das Trägerelement zumindest teilweise aufliegt, zu beaufschlagen. Mittels der erfindungsgemäßen Ausgestaltung kann vorteilhaft einem Abheben des Trägerelements von der Auflagefläche, das eine Messergebnis beeinflussen könnte, entgegengewirkt werden. Es kann vorteilhaft eine hohe Wiederholgenauigkeit einer Messung erfolgen. Es kann vorteilhaft eine geringe Kalibrierungsrate der Erfassungseinheit ermöglicht werden. Es kann vorteilhaft eine präzise Erfassung der Stärke des aufgetragenen Materials erreicht werden. Es kann vorteilhaft eine hohe Prozessqualität erreicht werden.

Zudem wird vorgeschlagen, dass die Erfassungseinheit zumindest ein, insbesondere das bereits zuvor genannte, Niederhalteelement aufweist, wobei das Sensorelement und das Niederhalteelement überdeckend angeordnet sind, insbesondere betrachtet entlang einer zumindest im Wesentlichen senkrecht zu einer, insbesondere der bereits zuvor genannten, Auflagefläche der Materialauftrageinheit verlaufenden Richtung. Vorzugsweise sind das Niederhalteelement und das Sensorelement entlang der zumindest im Wesentlichen senkrecht zur Auflagefläche der Materialauftrageinheit verlaufenden Richtung relativ zueinander beabstandet angeordnet. Insbesondere bei einer Projektion einer maximalen Niederhaltefläche des Niederhalteelements und einer maximalen Quererstreckungsfläche des Sensorelements entlang der zumindest im Wesentlichen senkrecht zur Auflagefläche der Materialauftrageinheit verlaufenden Richtung in eine gemeinsame Ebene, überdecken sich die maximale Niederhaltefläche des Niederhalteelements und die maximale Quererstreckungsfläche des Sensorelements insbesondere zu mehr als 30 %, bevorzugt zu mehr als 50 %, ganz bevorzugt zu mehr als 70 % und besonders bevorzugt zu mehr als 90 %. Mittels der erfindungsgemäßen Ausgestaltung kann vorteilhaft eine präzise Erfassung der Stärke des aufgetragenen Materials erreicht werden, insbesondere da vorteilhaft ein Niederhalten des Trägerelements im Bereich des Sensorelements erreicht werden kann. Es kann vorteilhaft einem Abheben des Trägerelements von der Auflagefläche, das ein Messergebnis beeinflussen könnte, entgegengewirkt werden. Es kann vorteilhaft eine hohe Wiederholgenauigkeit einer Messung erfolgen. Es kann vorteilhaft eine geringe Kalibrierungsrate der Erfassungseinheit ermöglicht werden. Es kann vorteilhaft eine hohe Prozessqualität erreicht werden.

Des Weiteren wird vorgeschlagen, dass die Erfassungseinheit zumindest ein, insbesondere das bereits zuvor genannte, Niederhalteelement aufweist, das als Unterdruckhalteelement, insbesondere als Vakuumgreifer oder als Strömungsgreifer, ausgebildet ist. Das Niederhalteelement kann als Flachsauggreifer, als Balgsauggreifer, als Strömungsgreifer oder als ein anderer, einem Fachmann als sinnvoll erscheinender Vakuumgreifer ausgebildet sein. Vorzugsweise umfasst die Erfassungseinheit eine Verbindungsschnittstelle zu einer Verbindung des Niederhalteelements mit einer externen Unterdruckvorrichtung oder die Erfassungseinheit umfasst selbst einen Unterdruckerzeuger, der mittels einer Unterdruckleitung der Erfassungseinheit mit dem Niederhalteelement verbunden ist. Denkbar ist auch, dass das Niederhalteelement den Unterdruck selbst erzeugt, wie beispielsweise dadurch, dass das Niederhalteelement, das mit Druckluft versorgt ist, eine Stärke der Druckluft, insbesondere der aus dem Niederhalteelement ausströmenden Druckluft, steuert oder regelt, insbesondere um eine Größe einer Niederhaltekraft zu variieren. Bevorzugt ist die externe Unterdruckvorrichtung oder der Unterdruckerzeuger als Vakuumpumpe ausgebildet. Es ist jedoch auch denkbar, dass die externe Unterdruckvorrichtung oder der Unterdruckerzeuger eine andere, einem Fachmann als sinnvoll erscheinende Ausgestaltung aufweisen. Vorzugsweise ist, insbesondere mittels der externen Unterdruckvorrichtung oder mittels des Unterdruckerzeugers, eine Größe eines am Niederhalteelement erzeugbaren Unterdrucks derart einstellbar, dass ein Anliegen des Trägerelements im Bereich des Niederhalteelements an der Auflagefläche bei gleichzeitiger Beweglichkeit des Trägerelements entlang der Transportrichtung relativ zur Auflagefläche realisierbar ist. Alternativ oder zusätzlich ist denkbar, dass im Bereich der Niederhaltefläche eine oder mehrere Ausgleichsöffnung/en der Erfassungseinheit angeordnet sind, die dazu vorgesehen sind, eine Größe eines am Niederhalteelement erzeugbaren Unterdrucks derart einzustellen, dass ein Anliegen des Trägerelements im Bereich des Niederhalteelements an der Auflagefläche bei gleichzeitiger Beweglichkeit des Trägerelements entlang der Transportrichtung relativ zur Auflagefläche realisierbar ist. Mittels der erfindungsgemäßen Ausgestaltung kann vorteilhaft eine materialschonende, insbesondere eine trägerelementschonende, Niederhaltung erreicht werden. Es kann vorteilhaft eine präzise Erfassung der Stärke des aufgetragenen Materials erreicht werden, insbesondere da vorteilhaft ein Niederhalten des Trägerelements im Bereich des Sensorelements erreicht werden kann. Es kann vorteilhaft einem Abheben des Trägerelements von der Auflagefläche, das ein Messergebnis beeinflussen könnte, entgegengewirkt werden. Es kann vorteilhaft eine hohe Wiederholgenauigkeit einer Messung erfolgen. Es kann vorteilhaft eine geringe Kalibrierungsrate der Erfassungseinheit ermöglicht werden. Es kann vorteilhaft eine hohe Prozessqualität erreicht werden.

Ferner wird vorgeschlagen, dass die Erfassungseinheit zumindest ein, insbesondere das bereits zuvor genannte, Niederhalteelement aufweist, das eine maximale Halteflächenerstreckung aufweist, die kleiner ist als eine maximale Quererstreckung einer, insbesondere der bereits zuvor genannten, Auflagefläche der Materialauftrageinheit. Es ist denkbar, dass die Erfassungseinheit eine Vielzahl an Niederhalteelementen aufweist, die gleichmäßig oder ungleichmäßig über die maximale Quererstreckung der Auflagefläche verteilt an der Auflagefläche angeordnet sind, dass die Erfassungseinheit ein einzelnes Niederhalteelement aufweist, dass symmetrisch oder unsymmetrisch zur maximalen Quererstreckung der Auflagefläche an der Auflagefläche angeordnet ist oder dass die Erfassungseinheit alle der zuvor genannten Ausgestaltungs- und/oder Anordnungsvarianten von Niederhalteelementen aufweist. Mittels der erfindungsgemäßen Ausgestaltung kann vorteilhaft eine im Wesentlichen punktuelle oder linienförmige Anordnung von Niederhalteelementen erreicht werden. Es kann ein vorhandener Bauraum besonders vorteilhaft genutzt werden. Es kann vorteilhaft eine präzise Erfassung der Stärke des aufgetragenen Materials erreicht werden, insbesondere da vorteilhaft ein Niederhalten des Trägerelements im Bereich des Sensorelements erreicht werden kann. Es kann vorteilhaft einem Abheben des Trägerelements von der Auflagefläche, das ein Messergebnis beeinflussen könnte, entgegengewirkt werden. Es kann vorteilhaft eine hohe Wiederholgenauigkeit einer Messung erfolgen. Es kann vorteilhaft eine geringe Kalibrierungsrate der Erfassungseinheit ermöglicht werden. Es kann vorteilhaft eine hohe Prozessqualität erreicht werden.

Zudem wird vorgeschlagen, dass die Erfassungseinheit zumindest ein, insbesondere das bereits zuvor genannte, Niederhalteelement aufweist, das innerhalb eines Erfassungsbereichs des Sensorelements an einer, insbesondere der bereits zuvor genannten, Auflagefläche der Materialauftrageinheit angeordnet ist. Bevorzugt ist die Niederhaltefläche des Niederhalteelements innerhalb des Erfassungsbereichs des Sensorelements an der Auflagefläche der Materialauftrageinheit angeordnet. Vorzugsweise schneidet eine Hauptausstrahlrichtung des Sensorelements die Niederhaltefläche des Niederhalteelements. Die Hauptausstrahlrichtung des Sensorelements verläuft bevorzugt quer, insbesondere zumindest im Wesentlichen senkrecht, zur Auflagefläche der Materialauftrageinheit. Es kann vorteilhaft eine präzise Erfassung der Stärke des aufgetragenen Materials erreicht werden, insbesondere da vorteilhaft ein Niederhalten des Trägerelements im Bereich des Sensorelements erreicht werden kann. Es kann vorteilhaft einem Abheben des Trägerelements von der Auflagefläche, das ein Messergebnis beeinflussen könnte, entgegengewirkt werden. Es kann vorteilhaft eine hohe Wiederholgenauigkeit einer Messung erfolgen. Es kann vorteilhaft eine geringe Kalibrierungsrate der Erfassungseinheit ermöglicht werden. Es kann vorteilhaft eine hohe Prozessqualität erreicht werden.

Des Weiteren wird vorgeschlagen, dass die Produktionsvorrichtung zumindest eine Aktoreinheit umfasst, die dazu vorgesehen ist, zumindest eine Position eines Verschluss- und/oder Abstreifelements der Materialauftrageinheit relativ zu einer, insbesondere der bereits zuvor genannten, Auflagefläche der Materialauftrageinheit und/oder zum Trägerelement in Abhängigkeit von einer mittels des Sensorelements erfassten Stärke des aufgetragenen Materials einzustellen. Die Aktoreinheit kann dazu vorgesehen sein, das Verschluss- und/oder Abstreifelement translatorisch oder rotatorisch zu bewegen. Vorzugsweise ist die Aktoreinheit dazu vorgesehen, das Verschluss- und/oder Abstreifelement translatorisch entlang einer zumindest im Wesentlichen senkrecht zur Auflagefläche verlaufenden Bewegungsachse des Verschluss- und/oder Abstreifelements zu bewegen. Das Verschluss- und/oder Abstreifelement ist als Rakelelement ausgebildet. Das Verschluss- und/oder Abstreifelement ist dazu vorgesehen, eine Auftragungsöffnung eines Rakelkastens der Materialauftrageinheit zu öffnen oder zu schließen. Die Produktionsvorrichtung umfasst bevorzugt zumindest eine Recheneinheit, die zumindest zu einer Verarbeitung von Sensorsignalen des Sensorelements und zu einer Ansteuerung der Aktoreinheit in Abhängigkeit von den Sensorsignalen vorgesehen ist. Bevorzugt ist die Recheneinheit zu einer Ansteuerung des Niederhalteelements vorgesehen. Die Recheneinheit kann alternativ oder zusätzlich zu einer Ansteuerung von weiteren Prozessen, Einheiten und/oder Elementen der Produktionsvorrichtung vorgesehen sein. Unter einer "Recheneinheit" soll insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Vorzugsweise sind die Bauteile der Recheneinheit auf einer gemeinsamen Platine angeordnet und/oder vorteilhaft in einem gemeinsamen Gehäuse angeordnet. Mittels der erfindungsgemäßen Ausgestaltung kann vorteilhaft ein hoher Automatisierungsgrad erreicht werden. Es kann vorteilhaft eine präzise Einstellung einer, insbesondere maximalen, Stärke des auf das Trägerelement aufgetragenen Materials ermöglicht werden. Es kann vorteilhaft eine hohe Prozessqualität erreicht werden.

Zudem geht die Erfindung aus von einem Verfahren zu einer Herstellung von duroplastischen Halbzeugen, insbesondere unter Verwendung einer erfindungsgemäßen Produktionsvorrichtung. Es wird vorgeschlagen, dass in zumindest einem Verfahrensschritt eine, insbesondere maximale, Stärke eines auf ein, insbesondere das bereits zuvor genannte, Trägerelement aufgetragenen Materials, insbesondere einer Harzmatrix, mittels eines, insbesondere optischen, Sensorelements einer, insbesondere der bereits zuvor genannten, Erfassungseinheit erfasst wird. Bevorzugt wird in zumindest einem Verfahrensschritt das aufzutragende Material hergestellt, insbesondere infolge einer Mischung von einzelnen Komponenten des Materials, wie beispielsweise einem vernetzungsfähigen Harz, Zusatzstoffe, wie beispielsweise Additive zur Schwundreduktion, Trennmittel, Reaktionsmittel o.dgl. Vorzugsweise wird das aufzutragende Material nach einer Herstellung, insbesondere nach einem Mischen, der Produktionsvorrichtung, insbesondere der Materialauftrageinheit, zugeführt. Es ist jedoch alternativ oder zusätzlich denkbar, dass das aufzutragende Material als Fertigmischung aus Behältern, wie beispielsweise Tanks o. dgl., oder über ein Rohrleitungssystem, bereits fertig gemischt der Produktionsvorrichtung, insbesondere der Materialauftrageinheit, zugeführt wird. Bevorzugt wird das aufzutragende Material, insbesondere nach einem Mischen, mittels der Materialauftrageinheit auf das Trägerelement aufgetragen. Eine, insbesondere maximale, Stärke des auf das Trägerelement aufgetragenen Materials, insbesondere einer Harzmatrix, wird bevorzugt in zumindest einem Verfahrensschritt überwacht, insbesondere infolge einer Auswertung der Signaldaten des Sensorelements durch die Recheneinheit. In zumindest einem Verfahrensschritt werden vorzugsweise Fasern, insbesondere geschnittene Fasern, auf das Trägerelement, auf dem bereits das Material, insbesondere die Harzmatrix, aufgetragen wurde, aufgetragen. Insbesondere wird in zumindest einem Verfahrensschritt erneut das Material, insbesondere die Harzmatrix, auf das Trägerelement, auf dem bereits das Material, insbesondere die Harzmatrix, sowie die Fasern aufgetragen wurden, aufgetragen. Bevorzugt erfolgt in zumindest einem Verfahrensschritt eine Zuführung des Trägerelements und des darauf aufgetragenen Materials zu einer Trocknungseinheit der Fertigungsanlage. Alternativ ist es auch denkbar, dass die Fertigungsanlage frei von der Trocknungseinheit ausgebildet ist, wobei in zumindest einem Verfahrensschritt eine Zuführung des Trägerelements und des darauf aufgetragenen Materials zu einer Lagereinheit erfolgt, um einen Reifprozess durchzuführen. Beispielsweise wird für den Reifprozess das Trägerelement und das darauf aufgetragene Material in einen temperierten Raum der Lagereinheit verbracht, wobei das Trägerelement und das darauf aufgetragene Material dort für eine vorgegebene Zeit, insbesondere wenige Tage, zur Reifung verbleibt. Während der Reifung erhöht sich vorzugsweise die Viskosität der Harzmatrix, so dass bei der folgenden Weiterverarbeitung das Trägerelement von dem Material abgezogen werden kann und das Material nun auch ohne Trägerelement handhabbar ist. Der Reifprozess kann, wie bereits oben aufgeführt, mittels der Trocknungseinheit der Fertigungsanlage innerhalb einer kurzen Zeitspanne realisiert werden, um eine vorteilhafte direkte Weiterverarbeitung zu ermöglichen, insbesondere bei einer Ausgestaltung des Verfahrens als Direkt-SMC-Produktionsverfahren. Vorzugsweise erfolgt anschließend an eine Trocknung, insbesondere mittels der Trocknungseinheit der Fertigungsanlage, eine Weiterverarbeitung oder eine Lagerung des Trägerelements und des darauf aufgetragenen Materials. Mittels der erfindungsgemäßen Ausgestaltung kann vorteilhaft eine hohe Prozessqualität erreicht werden. Es kann vorteilhaft mittels der Erfassungseinheit eine, insbesondere maximale, Stärke des auf das Trägerelement aufgetragenen Materials, das durch die Auftragungsöffnung auf das Trägerelement aufbringbar ist, überprüft werden.

Des Weiteren wird vorgeschlagen, dass in zumindest einem Verfahrensschritt das Trägerelement zumindest abschnittsweise mittels eines, insbesondere des bereits zuvor genannten, Niederhalteelements einer, insbesondere der bereits zuvor genannten, Erfassungseinheit mit einer Kraft in Richtung einer, insbesondere der bereits zuvor genannten, Auflagefläche einer, insbesondere der bereits zuvor genannten, Materialauftrageinheit, auf der das Trägerelement zumindest teilweise aufliegt, beaufschlagt wird. Vorzugsweise wird das Trägerelement zumindest während einer Erfassung einer, insbesondere maximalen, Stärke des auf das Trägerelement aufgetragenen Materials, insbesondere der Harzmatrix, mittels des Sensorelements der Erfassungseinheit mittels des Niederhalteelements mit einer Kraft in Richtung der Auflagefläche beaufschlagt. Es ist denkbar, dass das Niederhalteelement das Trägerelement lediglich temporär mit einer Kraft in Richtung der Auflagefläche beaufschlagt oder dass das Niederhalteelement das Trägerelement während einer gesamten Betriebszeit der Produktionsvorrichtung zumindest im Bereich des Sensorelements mit einer Kraft in Richtung der Auflagefläche beaufschlagt. Vorzugsweise wird das Trägerelement kontinuierlich gefördert, wobei ein Auftragen des Materials auf das Trägerelement ebenfalls kontinuierlich erfolgt. Insbesondere erfolgt ein Erfassen einer, insbesondere maximalen, Stärke des auf das Trägerelement aufgetragenen Materials, insbesondere der Harzmatrix, mittels des Sensorelements ebenfalls kontinuierlich. Es ist jedoch auch denkbar, dass alternativ oder zusätzlich eine intermittierende Förderung des Trägerelements und/oder eine intermittierende Erfassung einer, insbesondere maximalen, Stärke des auf das Trägerelement aufgetragenen Materials erfolgt. Mittels der erfindungsgemäßen Ausgestaltung kann vorteilhaft eine hohe Prozessqualität erreicht werden. Es kann vorteilhaft mittels der Erfassungseinheit eine, insbesondere maximale, Stärke des auf das Trägerelement aufgetragenen Materials, das durch die Auftragungsöffnung auf das Trägerelement aufbringbar ist, überprüft werden.

Die erfindungsgemäße Produktionsvorrichtung und/oder das erfindungsgemäße Verfahren sollen/soll hierbei nicht auf die oben beschriebene Anwendung und Ausführungsform beschränkt sein. Insbesondere können/kann die erfindungsgemäße Produktionsvorrichtung und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Produktionsvorrichtung als Teil einer Fertigungsanlage, insbesondere einer SMC-Fertigungsanlage, in einer schematischen Darstellung,
- Fig. 2: eine Prinzipdarstellung einer Funktionsweise einer Materialauftrageinheit und einer Erfassungseinheit der erfindungsgemäßen Produktionsvorrichtung in einer schematischen Darstellung,
- Fig. 3: eine Schnittansicht der Materialauftrageinheit und der Erfassungseinheit der erfindungsgemäßen Produktionsvorrichtung in einer schematischen Darstellung,
- Fig. 4: eine Detailansicht der Erfassungseinheit der erfindungsgemäßen Produktionsvorrichtung in einer schematischen Darstellung und
- Fig. 5: einen Ablauf eines erfindungsgemäßen Verfahrens zumindest zu einer Herstellung von duroplastischen Halbzeugen in einer schematischen Darstellung.

### Beschreibung des Ausführungsbeispiels

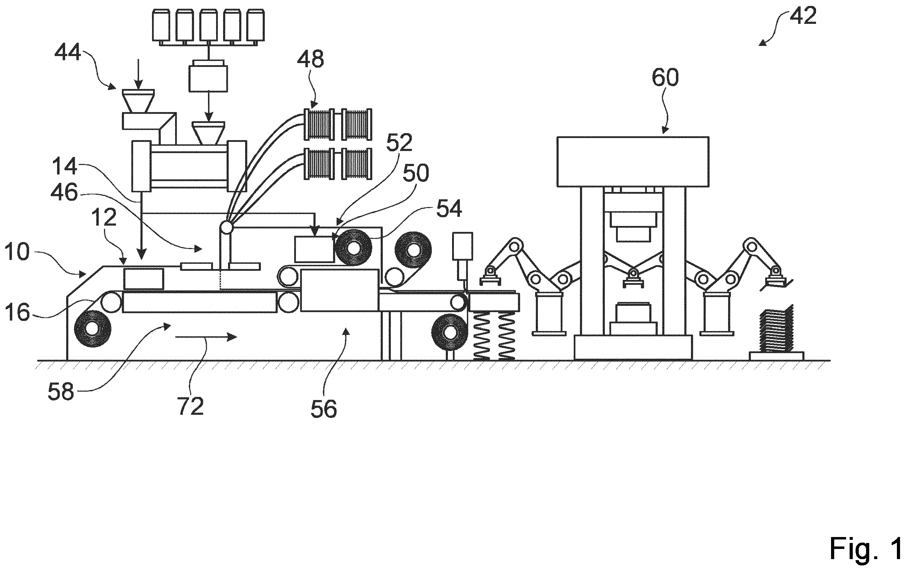

Figur 1 zeigt eine Fertigungsanlage 42, insbesondere eine SMC-Fertigungsanlage, zu einer Fertigung von duroplastischen Halbzeugen. Die Fertigungsanlage 42 umfasst vorzugsweise eine Mischeinheit 44 zu einer Herstellung eines auf ein Trägerelement 16 aufzutragenden Materials 14, insbesondere einer Harzmatrix. Vorzugsweise ist die Mischeinheit 44 auf eine, einem Fachmann bereits bekannte Art und Weise zu einer Mischung von einzelnen Komponenten des aufzutragenden Materials 14, wie beispielsweise einem vernetzungsfähigen Harz und/oder Zusatzstoffen, wie beispielsweise Additive zur Schwundreduktion, Trennmittel, Reaktionsmittel o.dgl., vorgesehen. Es ist jedoch auch denkbar, dass die Fertigungsanlage 42 alternativ oder zusätzlich zur Mischeinheit 44 eine Materialzuführeinheit (hier nicht näher dargestellt) aufweist, die dazu vorgesehen ist, ein bereits fertig gemischtes aufzutragendes Material 14 beispielsweise aus einem externen Materialtank (hier nicht näher dargestellt) zumindest einer eine Materialauftrageinheit 12 umfassenden Produktionsvorrichtung 10 der Fertigungsanlage 42 zuzuführen. Die Mischeinheit 44 oder die Materialzuführeinheit ist vorzugsweise über Zuführleitungen der Fertigungsanlage 42 zumindest mit der Materialauftrageinheit 12 verbunden, insbesondere um das aufzutragende Material 14 der Materialauftrageinheit 12 zuzuführen. Die Materialauftrageinheit 12 ist zu einem Auftragen des Materials 14, insbesondere der Harzmatrix, auf das Trägerelement 16, insbesondere eine Trägerfolie vorgesehen. Die Materialauftrageinheit 12 ist als eine Rakeleinheit ausgebildet.

Die Fertigungsanlage 42 umfasst bevorzugt zumindest eine Faserschneideinheit 46 und/oder eine Faserzuführeinheit 48, die dazu vorgesehen sind/ist Fasern, insbesondere geschnittene Fasern, auf das Trägerelement 16, auf dem bereits das Material 14, insbesondere die Harzmatrix, aufgetragen ist, zuzuführen oder aufzutragen, insbesondere auf eine, einem Fachmann bereits bekannte Art und Weise. Bevorzugt weist die Fertigungsanlage 42 eine zumindest eine weitere Materialauftrageinheit 50 umfassende weitere Produktionsvorrichtung 52 auf, die vorzugsweise mit der Mischeinheit 44 oder mit der Materialzuführeinheit über Zuführleitungen der Fertigungsanlage 42 verbunden ist, insbesondere um der weiteren Materialauftrageinheit 50 ebenfalls Material 14 zuzuführen. Die weitere Materialauftrageinheit 50 ist bevorzugt dazu vorgesehen, dem Trägerelement 16, insbesondere nachdem die Fasern zugeführt worden sind, Material 14 zuzuführen oder einem weiteren Trägerelement 54 Material 14 zuzuführen, das überdeckend mit dem Trägerelement 16, auf dem bereits Material 14 und Fasern aufgetragen sind, zusammenführbar ist, insbesondere auf eine, einem Fachmann bereits bekannte Art und Weise. Die Produktionsvorrichtung 10 und die weitere Produktionsvorrichtung 52 weisen vorzugsweise eine analoge Ausgestaltung auf.

Bevorzugt umfasst die Fertigungsanlage 42 eine Trocknungseinheit 56 zu einer Trocknung des aufgetragenen Materials 14, insbesondere auf eine, einem Fachmann bereits bekannte Art und Weise. Die Trocknungseinheit 56 ist insbesondere mittels einer Förder- und/oder Transporteinheit 58 der Fertigungsanlage 42 auf eine, einem Fachmann bereits bekannte Art und Weise wirkverbunden, insbesondere um eine Zuführung des Trägerelements 16 und/oder des weiteren Trägerelements 54 zu realisieren. Insbesondere ist die Förder- und/oder Transporteinheit 58 der Fertigungsanlage 42 dazu vorgesehen, das infolge einer Trocknung erhaltene duroplastische Halbzeug zu einer Weiterverarbeitung einer weiterverarbeitenden Herstellungsvorrichtung 60, wie beispielsweise einer Presse usw., oder einer Lagerungsvorrichtung (hier nicht näher dargestellt) zu einer Lagerung zuzuführen.

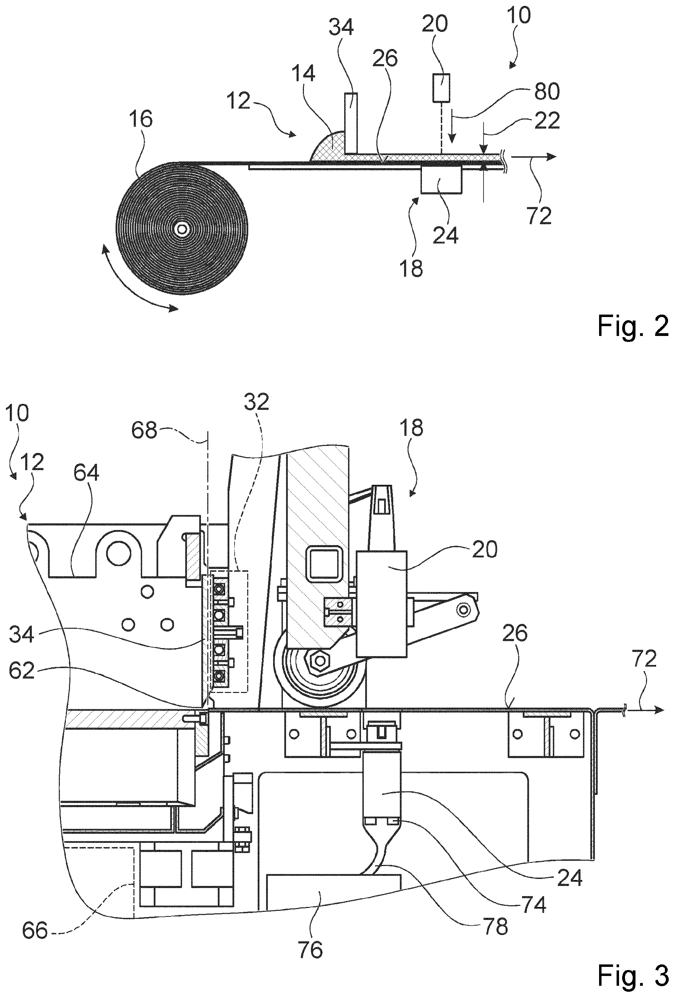

Figur 2 zeigt eine Prinzipskizze der Produktionsvorrichtung 10. Vorzugsweise trifft die nachfolgende Beschreibung der Produktionsvorrichtung 10 auch auf die weitere Produktionsvorrichtung 52 zu. Die Produktionsvorrichtung 10 umfasst zumindest die Materialauftrageinheit 12, die Rakeleinheit, zu einem Auftragen von dem Material 14, insbesondere von der Harzmatrix, auf das Trägerelement 16. Das Trägerelement 16 ist insbesondere als eine Trägerfolie ausgebildet. Es ist jedoch auch denkbar, dass das Trägerelement 16 als Förderband, insbesondere der Förder- und/oder Transporteinheit 58, ausgebildet ist und die Materialauftrageinheit 12 das Material 14 direkt auf das Förderband aufträgt. Die Produktionsvorrichtung 10 umfasst zumindest eine Erfassungseinheit 18, die zumindest ein, insbesondere optisches, Sensorelement 20 zu einer Erfassung einer, insbesondere maximalen, Stärke 22 des auf das Trägerelement 16 aufgetragenen Materials 14 aufweist. Die Erfassungseinheit 18 ist vorzugsweise dazu vorgesehen, eine, insbesondere maximale, Stärke 22 des auf das Trägerelement 16 aufgetragenen Materials 14 berührungslos zu erfassen. Bevorzugt ist die Erfassungseinheit 18 dazu vorgesehen, eine, insbesondere maximale, Stärke 22 des auf das Trägerelement 16 aufgetragenen Materials 14 optisch zu erfassen. Das Sensorelement 20 ist vorzugsweise als optisches Sensorelement ausgebildet, wie beispielsweise als Lichtsensor, insbesondere Lasersensor oder konfokal-chromatischer Sensor o. dgl. Das Sensorelement 20 ist bevorzugt als konfokal-chromatischer Sensor ausgebildet.

Bevorzugt ist das Sensorelement 20 in einem Nahbereich einer Auftragungsöffnung 62 (vgl. Figur 3) der Materialauftrageinheit 12 angeordnet. Eine Größe, insbesondere eine Höhe, der Auftragungsöffnung 62 ist bevorzugt mittels eines Verschluss- und/oder Abstreifelements 34 (vgl. Figur 3), eines Rakelelements, der Materialauftrageinheit 12 einstellbar, insbesondere infolge einer Bewegung des Verschluss- und/oder Abstreifelements 34 relativ zu einem Materialaufnahmeelement 64 (vgl. Figur 3), insbesondere einem Rakelkasten, der Materialauftrageinheit 12. Vorzugsweise ist eine, insbesondere maximale, Stärke 22 des auf das Trägerelement 16 aufgetragenen Materials 14 durch eine Größe, insbesondere eine Höhe, der Auftragungsöffnung 62 vorgebbar. Mittels der Erfassungseinheit 18 ist eine, insbesondere maximale, Stärke 22 des auf das Trägerelement 16 aufgetragenen Materials 14, das durch die Auftragungsöffnung 62 auf das Trägerelement 16 aufbringbar ist, überprüfbar. Bei einer Abweichung der gewünschten, insbesondere maximalen, Stärke 22 des auf das Trägerelement 16 aufgetragenen Materials 14 kann vorteilhaft infolge einer Änderung einer Position des Verschluss- und/oder Abstreifelements 34, insbesondere des Rakelelements, der Materialauftrageinheit 12 relativ zum Materialaufnahmeelement 64, insbesondere dem Rakelkasten, eine, insbesondere automatische und/oder manuelle Nachjustierung der, insbesondere maximalen, Stärke 22 des auf das Trägerelement 16 aufgetragenen Materials 14 erfolgen. Die Produktionsvorrichtung 10 oder die Fertigungsanlage 42 umfasst zumindest eine Recheneinheit 66. Die Recheneinheit 66 ist vorzugsweise zumindest dazu vorgesehen, Signaldaten des Sensorelements 20 auszuwerten.

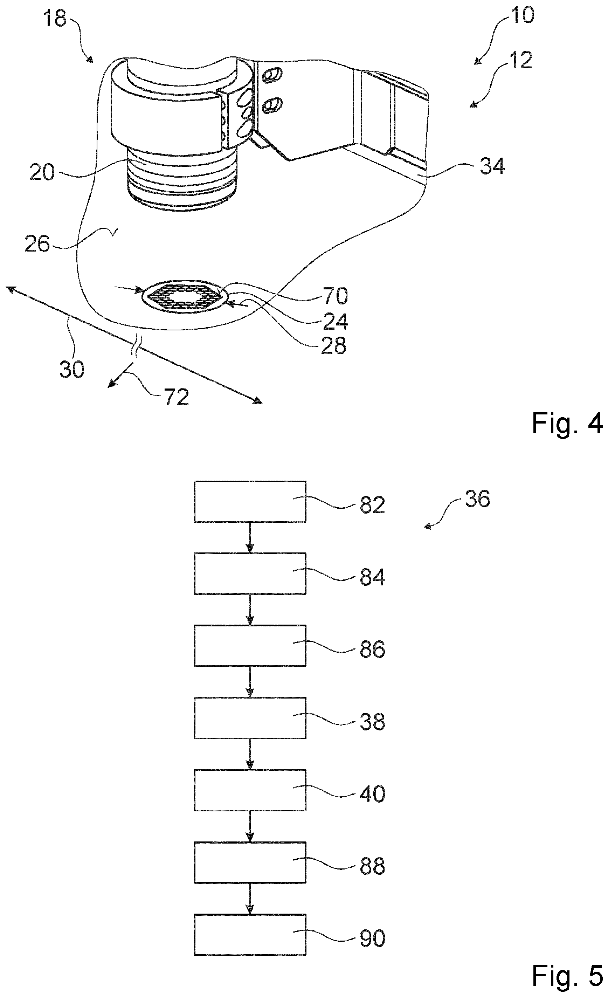

Die Produktionsvorrichtung 10 umfasst zumindest eine Aktoreinheit 32 (vgl. Figur 3), die dazu vorgesehen ist, zumindest eine Position des Verschluss- und/oder Abstreifelements 34 der Materialauftrageinheit 12 relativ zu einer Auflagefläche 26 (vgl. Figuren 3 und 4) der Materialauftrageinheit 12 und/oder zum Trägerelement 16 in Abhängigkeit von einer mittels des Sensorelements 20 erfassten Stärke 22 des aufgetragenen Materials 14 einzustellen. Die Aktoreinheit 32 kann dazu vorgesehen sein, das Verschluss- und/oder Abstreifelement 34 translatorisch oder rotatorisch zu bewegen. Vorzugsweise ist die Aktoreinheit 32 dazu vorgesehen, das Verschluss- und/oder Abstreifelement 34 translatorisch entlang einer zumindest im Wesentlichen senkrecht zur Auflagefläche 26 verlaufenden Bewegungsachse 68 (vgl. Figur 3) des Verschluss- und/oder Abstreifelements 34 zu bewegen. Vorzugsweise ist das Verschluss- und/oder Abstreifelement 34 translatorisch relativ zu einem Gegenelement, insbesondere einem Rakelgegenmesser, (hier nicht näher dargestellt) der Materialauftrageinheit 12 beweglich gelagert. Das Gegenelement, insbesondere das Rakelgegenmesser, ist dem Verschluss- und/oder Abstreifelement 34, insbesondere betrachtet entlang einer zumindest im Wesentlichen parallel zur Bewegungsachse 68 verlaufenden Richtung, gegenüberliegend an der Auftragungsöffnung 62, insbesondere an dem Materialaufnahmeelement 64, angeordnet. Die Recheneinheit 66 ist bevorzugt dazu vorgesehen, die Aktoreinheit 32 in Abhängigkeit von einer Verarbeitung von Sensorsignalen des Sensorelements 20 anzusteuern.

Die Erfassungseinheit 18 weist zumindest ein Niederhalteelement 24 (vgl. Figuren 2 bis 4) auf, das dazu vorgesehen ist, das Trägerelement 16 zumindest abschnittsweise mit einer Kraft in Richtung der Auflagefläche 26 der Materialauftrageinheit 12, auf der das Trägerelement 16 zumindest teilweise aufliegt, zu beaufschlagen. Das Niederhalteelement 24 ist bevorzugt auf einer dem Sensorelement 20 abgewandten Seite des Trägerelements 16 an der Auflagefläche 26 angeordnet. Bevorzugt ist das Trägerelement 16 während eines Betriebs der Produktionsvorrichtung 10, insbesondere entlang einer zumindest im Wesentlichen parallel zur Auflagefläche 26 verlaufenden Richtung, über das Niederhalteelement 24 hinweg bewegbar, während das Niederhalteelement 24 das Trägerelement 16 mit einer Kraft in Richtung der Auflagefläche 26 beaufschlagt. Das Niederhalteelement 24, insbesondere eine Niederhaltefläche 70 des Niederhalteelements 24, weist vorzugsweise eine maximale Längserstreckung auf, die ein Vielfaches kleiner ist als eine maximale Längserstreckung der Auflagefläche 26. Bevorzugt verläuft die maximale Längserstreckung des Niederhalteelements 24, insbesondere der Niederhaltefläche 70 des Niederhalteelements 24, in einem an der Auflagefläche 26 angeordneten Zustand des Niederhalteelements 24 zumindest im Wesentlichen parallel zu einer Transportrichtung 72 (vgl. Figuren 2 und 3) der Produktionsvorrichtung 10, insbesondere im Bereich der Materialauftrageinheit 12, entlang derer das Trägerelement 16 während eines Betriebs der Produktionsvorrichtung 10 bewegt wird.

Die Erfassungseinheit 18 weist zumindest ein Niederhalteelement 24 auf, wobei das Sensorelement 20 und das Niederhalteelement 24 überdeckend angeordnet sind (vgl. Figuren 2 bis 4), insbesondere betrachtet entlang einer zumindest im Wesentlichen senkrecht zur Auflagefläche 26 der Materialauftrageinheit 12 verlaufenden Richtung. Vorzugsweise sind das Niederhalteelement 24 und das Sensorelement 20 entlang der zumindest im Wesentlichen senkrecht zur Auflagefläche 26 der Materialauftrageinheit 12 verlaufenden Richtung relativ zueinander beabstandet angeordnet.

Die Erfassungseinheit 18 weist zumindest das Niederhalteelement 24 auf, das als Unterdruckhalteelement, insbesondere als Vakuumgreifer oder als Strömungsgreifer, ausgebildet ist. Das Niederhalteelement 24 kann als Flachsauggreifer, als Balgsauggreifer oder als ein anderer, einem Fachmann als sinnvoll erscheinender Vakuumgreifer ausgebildet sein. Vorzugsweise umfasst die Erfassungseinheit 18 eine Verbindungsschnittstelle 74 zu einer Verbindung des Niederhalteelements 24 mit einer externen Unterdruckvorrichtung (nicht näher dargestellt) oder die Erfassungseinheit 18 umfasst selbst einen Unterdruckerzeuger 76 (vgl. Figur 3), der mittels einer Unterdruckleitung 78 der Erfassungseinheit 18 mit dem Niederhalteelement 24, insbesondere über die Verbindungsschnittstelle 74, verbunden ist. Denkbar ist auch, dass das Niederhalteelement 24 den Unterdruck selbst erzeugt, wie beispielsweise dadurch, dass das Niederhalteelement 24, das mit Druckluft versorgt ist, eine Stärke der Druckluft, insbesondere der aus dem Niederhalteelement 24 ausströmenden Druckluft, steuert oder regelt, wie beispielswiese mittels eines am Niederhalteelement 24 angeordneten Ventils, insbesondere um eine Größe einer Niederhaltekraft zu variieren. Die Erfassungseinheit 18 weist zumindest das Niederhalteelement 24 auf, das innerhalb eines Erfassungsbereichs des Sensorelements 20 an der Auflagefläche 26 der Materialauftrageinheit 12 angeordnet ist. Die Erfassungseinheit 18 weist zumindest das Niederhalteelement 24 auf, das eine maximale Halteflächenerstreckung 28 (vgl. Figur 4) aufweist, die kleiner ist als eine maximale Quererstreckung 30 der Auflagefläche 26 der Materialauftrageinheit 12. Bevorzugt ist die Niederhaltefläche 70 des Niederhalteelements 24 innerhalb des Erfassungsbereichs des Sensorelements 20 an der Auflagefläche 26 der Materialauftrageinheit 12 angeordnet. Vorzugsweise schneidet eine Hauptausstrahlrichtung 80 (vgl. Figur 2) des Sensorelements 20 die Niederhaltefläche 70 des Niederhalteelements 24. Die Hauptausstrahlrichtung 80 des Sensorelements 20 verläuft bevorzugt quer, insbesondere zumindest im Wesentlichen senkrecht, zur Auflagefläche 26 der Materialauftrageinheit 12 (vgl. Figuren 2 bis 4).

Figur 5 zeigt einen schematischen Ablauf eines Verfahrens 36 zu einer Herstellung von duroplastischen Halbzeugen, insbesondere unter Verwendung der Produktionsvorrichtung 10. Bevorzugt wird in zumindest einem Verfahrensschritt 82 das aufzutragende Material 14 hergestellt, insbesondere infolge einer Mischung von einzelnen Komponenten des Materials 14, wie beispielsweise einem vernetzungsfähigen Harz, Zusatzstoffe, wie beispielsweise Additive zur Schwundreduktion, Trennmittel, Reaktionsmittel o.dgl. Vorzugsweise wird das aufzutragende Material 14 in zumindest einem Verfahrensschritt 84 nach einer Herstellung, insbesondere nach einem Mischen, der Produktionsvorrichtung 10, insbesondere der Materialauftrageinheit 12, zugeführt. Bevorzugt wird das aufzutragende Material 14, insbesondere nach einem Mischen, in zumindest einem Verfahrensschritt 86 mittels der Materialauftrageinheit 12 auf das Trägerelement 16 aufgetragen.

In zumindest einem Verfahrensschritt 38 wird die, insbesondere maximale, Stärke 22 des auf das Trägerelement 16 aufgetragenen Materials 14, insbesondere der Harzmatrix, mittels des, insbesondere optischen, Sensorelements 20 der Erfassungseinheit 18 erfasst. Die, insbesondere maximale, Stärke 22 des auf das Trägerelement 16 aufgetragenen Materials 14, insbesondere der Harzmatrix, wird bevorzugt in dem Verfahrensschritt 38 überwacht, insbesondere infolge einer Auswertung der Signaldaten des Sensorelements 20 durch die Recheneinheit 66. In dem Verfahrensschritt 38 wird das Trägerelement 16 zumindest abschnittsweise mittels des Niederhalteelements 24 der Erfassungseinheit 18 mit einer Kraft in Richtung der Auflagefläche 26 der Materialauftrageinheit 12, auf der das Trägerelement 16 zumindest teilweise aufliegt, beaufschlagt.

In zumindest einem Verfahrensschritt 40 werden vorzugsweise Fasern, insbesondere geschnittene Fasern, auf das Trägerelement 16, auf dem bereits das Material 14, insbesondere die Harzmatrix, aufgetragen wurde, aufgetragen. Insbesondere wird in zumindest einem Verfahrensschritt 88 erneut das Material 14, insbesondere die Harzmatrix, auf das Trägerelement 16, auf dem bereits das Material 14, insbesondere die Harzmatrix, sowie die Fasern aufgetragen wurden, aufgetragen. Bevorzugt erfolgt in zumindest einem Verfahrensschritt 90 eine Zuführung des Trägerelements 16 und des darauf aufgetragenen Materials 14 zur Trocknungseinheit 56 der Fertigungsanlage 42. Alternativ ist es auch denkbar, dass die Fertigungsanlage frei von der Trocknungseinheit 56 ausgebildet ist, wobei in zumindest einem Verfahrensschritt eine Zuführung des Trägerelements 16 und des darauf aufgetragenen Materials 14 zu einer Lagereinheit (hier nicht näher dargestellt) erfolgt, um einen Reifprozess durchzuführen. Beispielsweise wird für den Reifprozess das Trägerelement 16 und das darauf aufgetragene Material 14 in einen temperierten Raum der Lagereinheit verbracht, wobei das Trägerelement 16 und das darauf aufgetragene Material 14 dort für eine vorgegebene Zeit, insbesondere wenige Tage, zur Reifung verbleibt. Während der Reifung erhöht sich vorzugsweise die Viskosität der Harzmatrix, so dass bei der folgenden Weiterverarbeitung das Trägerelement 16 von dem Material 14 abgezogen werden kann und das Material 14 nun auch ohne Trägerelement 16 handhabbar ist. Der Reifprozess kann, wie bereits oben aufgeführt, mittels der Trocknungseinheit 56 der Fertigungsanlage 42 innerhalb einer kurzen Zeitspanne realisiert werden, um eine vorteilhafte direkte Weiterverarbeitung zu ermöglichen, insbesondere bei einer Ausgestaltung des Verfahrens als Direkt-SMC-Produktionsverfahren. Vorzugsweise erfolgt anschließend an eine Trocknung, insbesondere mittels der Trocknungseinheit 56 der Fertigungsanlage 42, eine Weiterverarbeitung oder eine Lagerung des Trägerelements 16 und des darauf aufgetragenen Materials 14 - insbesondere des duroplastischen Halbzeugs.

### Bezugszeichen

- 10: Produktionsvorrichtung
- 12: Materialauftrageinheit
- 14: Material
- 16: Trägerelement
- 18: Erfassungseinheit
- 20: Sensorelement
- 22: Stärke
- 24: Niederhalteelement
- 26: Auflagefläche
- 28: Halteflächenerstreckung
- 30: Quererstreckung
- 32: Aktoreinheit
- 34: Verschluss- und/oder Abstreifelement
- 36: Verfahren
- 38: Verfahrensschritt
- 40: Verfahrensschritt
- 42: Fertigungsanlage
- 44: Mischeinheit
- 46: Faserschneideinheit
- 48: Faserzuführeinheit
- 50: Materialauftrageinheit
- 52: Produktionsvorrichtung
- 54: Trägerelement
- 56: Trocknungseinheit
- 58: Förder- und/oder Transporteinheit
- 60: Herstellungsvorrichtung
- 62: Auftragungsöffnung
- 64: Materialaufnahmeelement
- 66: Recheneinheit
- 68: Bewegungsachse
- 70: Niederhaltefläche
- 72: Transportrichtung
- 74: Verbindungsschnittstelle
- 76: Unterdruckerzeuger
- 78: Unterdruckleitung
- 80: Hauptausstrahlrichtung
- 82: Verfahrensschritt
- 84: Verfahrensschritt
- 86: Verfahrensschritt
- 88: Verfahrensschritt
- 90: Verfahrensschritt

## Patentansprüche

1. Produktionsvorrichtung, insbesondere SMC-Produktionsvorrichtung, zu einer Herstellung von duroplastischen Halbzeugen, mit zumindest einer als Rakeleinheit ausgebildeten Materialauftrageinheit (12) zu einem Auftragen von einem Material (14), insbesondere einer Harzmatrix, auf ein Trägerelement (16), insbesondere eine Trägerfolie, wobei eine, insbesondere maximale, Stärke des auf das Trägerelement (16) aufgetragenen Materials (14) durch eine Größe, insbesondere eine Höhe, einer Auftragungsöffnung (62) der als Rakeleinheit ausgebildeten Materialauftrageinheit (12) vorgebbar ist, **gekennzeichnet durch** zumindest eine Erfassungseinheit (18), die zumindest ein, insbesondere optisches, Sensorelement (20) zu einer Erfassung der, insbesondere maximalen, Stärke (22) des auf das Trägerelement (16) aufgetragenen Materials (14) aufweist.

2. Produktionsvorrichtung nach Anspruch 1, **dadurch gekennzeichnet, dass** das Sensorelement (20) als konfokal-chromatischer Sensor ausgebildet ist.

3. Produktionsvorrichtung nach Anspruch 1 oder 2, **dadurch gekennzeichnet, dass** die Erfassungseinheit (18) zumindest ein Niederhalteelement (24) aufweist, das dazu vorgesehen ist, das Trägerelement (16) zumindest abschnittsweise mit einer Kraft in Richtung einer Auflagefläche (26) der Materialauftrageinheit (12), auf der das Trägerelement (16) zumindest teilweise aufliegt, zu beaufschlagen.

4. Produktionsvorrichtung nach einem der vorhergehenden Ansprüche, **dadurch gekennzeichnet, dass** die Erfassungseinheit (18) zumindest ein Niederhalteelement (24) aufweist, wobei das Sensorelement (20) und das Niederhalteelement (24) überdeckend angeordnet sind, insbesondere betrachtet entlang einer zumindest im Wesentlichen senkrecht zu einer Auflagefläche (26) der Materialauftrageinheit (12) verlaufenden Richtung.

5. Produktionsvorrichtung nach einem der vorhergehenden Ansprüche, **dadurch gekennzeichnet, dass** die Erfassungseinheit (18) zumindest ein Niederhalteelement (24) aufweist, das als Unterdruckhalteelement, insbesondere als Vakuumgreifer, ausgebildet ist.

6. Produktionsvorrichtung nach einem der vorhergehenden Ansprüche, **dadurch gekennzeichnet, dass** die Erfassungseinheit (18) zumindest ein Niederhalteelement (24) aufweist, das eine maximale Halteflächenerstreckung (28) aufweist, die kleiner ist als eine maximale Quererstreckung (30) einer Auflagefläche (26) der Materialauftrageinheit (12).

7. Produktionsvorrichtung nach einem der vorhergehenden Ansprüche, **dadurch gekennzeichnet, dass** die Erfassungseinheit (18) zumindest ein Niederhalteelement (24) aufweist, das innerhalb eines Erfassungsbereichs des Sensorelements (20) an einer Auflagefläche (26) der Materialauftrageinheit (12) angeordnet ist.

8. Produktionsvorrichtung nach einem der vorhergehenden Ansprüche, **gekennzeichnet durch** zumindest eine Aktoreinheit (32), die dazu vorgesehen ist, zumindest eine Position eines Verschluss- und/oder Abstreifelements (34) der Materialauftrageinheit (12) relativ zu einer Auflagefläche (26) der Materialauftrageinheit (12) und/oder zum Trägerelement (16) in Abhängigkeit von der mittels des Sensorelements (20) erfassten Stärke (22) des aufgetragenen Materials (14) einzustellen.

9. Verfahren zu einer Herstellung von duroplastischen Halbzeugen unter Verwendung einer Produktionsvorrichtung nach einem der vorhergehenden Ansprüche, **dadurch gekennzeichnet, dass** in zumindest einem Verfahrensschritt (38) die, insbesondere maximale, Stärke (22) des auf das Trägerelement (16) aufgetragenen Materials (14), insbesondere der Harzmatrix, mittels des, insbesondere optischen, Sensorelements (20) der Erfassungseinheit (18) erfasst wird.

10. Verfahren nach Anspruch 9, **dadurch gekennzeichnet, dass** in zumindest einem Verfahrensschritt (38) das Trägerelement (16) zumindest abschnittsweise mittels eines Niederhalteelements (24) der Erfassungseinheit (18) mit einer Kraft in Richtung einer Auflagefläche (26) der Materialauftrageinheit (12), auf der das Trägerelement (16) zumindest teilweise aufliegt, beaufschlagt wird.

## Claims

1. Production device, in particular SMC production device, for a creation of thermoset semi-finished products, with at least one material application unit (12) configured as a doctor blade unit for applying a material (14), in particular a resin matrix, onto a carrier element (16), in particular a carrier film, wherein an, in particular maximum, thickness of the material (14) applied onto the carrier element (16) can be predetermined by a size, in particular a height, of an application opening (62) of the material application unit (12) configured as a doctor blade unit, **characterized by** at least one detection unit (18), which has at least one, in particular optical, sensor element (20) for detecting the, in particular maximum, thickness (22) of the material (14) applied onto the carrier element (16).

2. Production device according to claim 1, **characterized in that** the sensor element (20) is configured as a confocal chromatic sensor.

3. Production device according to claim 1 or 2, **characterized in that** the detection unit (18) has at least one hold-down element (24) which is provided to act on the carrier element (16), at least in some sections, with a force in the direction of a bearing surface (26) of the material application unit (12), on which the carrier element (16) bears at least partially.

4. Production device according to any one of the preceding claims, **characterized in that** the detection unit (18) has at least one hold-down element (24), wherein the sensor element (20) and the hold-down element (24) are arranged to be overlapping, in particular when viewed in a direction extending at least substantially perpendicular to a bearing surface (26) of the material application unit (12).

5. Production device according to any one of the preceding claims, **characterized in that** the detection unit (18) has at least one hold-down element (24), which is configured as a vacuum holding element, in particular as a vacuum gripper.

6. Production device according to any one of the preceding claims, **characterized in that** the detection unit (18) has at least one hold-down element (24), which has a maximum holding surface extension (28), which is smaller than a maximum transverse extension (30) of a bearing surface (26) of the material application unit (12).

7. Production device according to any one of the preceding claims, **characterized in that** the detection unit (18) has at least one hold-down element (24), which is arranged within a detection area of the sensor element (20) on a bearing surface (26) of the material application unit (12).

8. Production device according to any one of the preceding claims, **characterized by** at least one actuator unit (32), which is provided to adjust at least one position of a closure and/or wiper element (34) of the material application unit (12) relative to a bearing surface (26) of the material application unit (12) and/or to the carrier element (16) as a function of the thickness (22) of the applied material (14) detected by means of the sensor element (20).

9. Methodfor a creation of thermoset semi-finished products using a production device according to any one of the preceding claims, **characterized in that** in at least one method step (38) the, in particular maximum, thickness (22) of the material (14) applied to the carrier element (16), in particular the resin matrix, is detected by means of the, in particular optical, sensor element (20) of the detection unit (18).

10. Method according to claim 9, **characterized in that** in at least one method step (38) the carrier element (16) is acted on at least in some sections by means of a hold-down element (24) of the detection unit (18) with a force in the direction of a bearing surface (26) of the material application unit (12), on which the carrier element (16) bears at least partially.

## Revendications

1. Dispositif de production, en particulier dispositif de production SMC, pour une fabrication de demi-produits thermodurcissables, avec au moins une unité d'application de matériau (12) réalisée comme unité formant docteur pour une application d'un matériau (14), en particulier une matrice de résine, sur un élément porteur (16), en particulier un film porteur, dans lequel une épaisseur, en particulier maximale, du matériau (14) appliqué sur l'élément porteur (16) peut être prédéfinie par une grandeur, en particulier une hauteur, d'une ouverture d'application (62) de l'unité d'application de matériau (12) réalisée comme unité formant docteur, **caractérisé par** au moins une unité de détection (18) qui présente au moins un élément capteur (20), en particulier optique, pour une détection de l'épaisseur (22), en particulier maximale, du matériau (14) appliqué sur l'élément porteur (16).

2. Dispositif de production selon la revendication 1, **caractérisé en ce que** l'élément capteur (20) est formé comme capteur confocal chromatique.

3. Dispositif de production selon la revendication 1 ou 2, **caractérisé en ce que** l'unité de détection (18) présente au moins un élément de maintien en place (24) qui est prévu afin d'agir sur l'élément porteur (16) au moins par sections avec une force en direction d'une surface d'appui (26) de l'unité d'application de matériau (12), sur laquelle l'élément porteur (16) repose au moins partiellement.

4. Dispositif de production selon l'une quelconque des revendications précédentes, **caractérisé en ce que** l'unité de détection (18) présente au moins un élément de maintien en place (24), dans lequel l'élément capteur (20) et l'élément de maintien en place (24) sont agencés de façon à se chevaucher, en particulier vu le long d'une direction s'étendant au moins sensiblement perpendiculairement à une surface d'appui (26) de l'unité d'application de matériau (12).

5. Dispositif de production selon l'une quelconque des revendications précédentes, **caractérisé en ce que** l'unité de détection (18) présente au moins un élément de maintien en place (24) qui est réalisé comme élément de maintien à vide, en particulier élément de préhension à vide.

6. Dispositif de production selon l'une quelconque des revendications précédentes, **caractérisé en ce que** l'unité de détection (18) présente au moins un élément de maintien en place (24) qui présente une étendue de surface de maintien (28) maximale qui est inférieure à une étendue transversale (30) maximale d'une surface d'appui (26) de l'unité d'application de matériau (12).

7. Dispositif de production selon l'une quelconque des revendications précédentes, **caractérisé en ce que** l'unité de détection (18) présente au moins un élément de maintien en place (24) qui est agencé au sein d'une zone de détection de l'élément capteur (20) au niveau d'une surface d'appui (26) de l'unité d'application de matériau (12).

8. Dispositif de production selon l'une quelconque des revendications précédentes, **caractérisé par** au moins une unité d'actionnement (32) qui est prévue afin de régler au moins une position d'un élément de fermeture et/ou de raclage (34) de l'unité d'application de matériau (12) par rapport à une surface d'appui (26) de l'unité d'application de matériau (12) et/ou à l'élément porteur (16) en fonction de l'épaisseur (22) du matériau appliqué (14) détectée au moyen de l'élément capteur (20).

9. Procédé pour une fabrication de demi-produits thermodurcissables en utilisant un dispositif de production selon l'une quelconque des revendications précédentes, **caractérisé en ce que** dans au moins une étape de procédé (38), l'épaisseur (22), en particulier maximale, du matériau (14) appliqué sur l'élément porteur (16), en particulier de la matrice de résine, est détectée au moyen de l'élément capteur (20), en particulier optique, de l'unité de détection (18).

10. Procédé selon la revendication 9, **caractérisé en ce que** dans au moins une étape de procédé (38), l'élément porteur (16) subit au moins par sections au moyen d'un élément de maintien en place (24) de l'unité de détection (18) une force en direction d'une surface d'appui (26) de l'unité d'application de matériau (12), sur laquelle l'élément porteur (16) repose au moins partiellement.
